## Europäisches Patentamt
## European Patent Office
## Office européen des brevets

(11) Publication number: **0 048 449**
**B1**

(12) **EUROPEAN PATENT SPECIFICATION**

(45) Date of publication of patent specification: **16.01.85**

(21) Application number: **81107351.9**

(22) Date of filing: **17.09.81**

(51) Int. Cl.⁴: **B 01 D 53/34,** C 01 B 17/60

(54) Method of purifying gases from acid gas components, especially purifying flue gases from sulphur dioxide.

(30) Priority: **22.09.80 SE 8006604**
**22.09.80 SE 8006603**

(43) Date of publication of application:
**31.03.82 Bulletin 82/13**

(45) Publication of the grant of the patent:
**16.01.85 Bulletin 85/03**

(84) Designated Contracting States:
**AT BE CH DE FR GB IT LI NL SE**

(56) References cited:
**EP-A-0 005 301**
**FR-A-2 181 988**
**US-A-3 261 662**
**US-A-3 882 221**
**US-A-3 966 878**

(73) Proprietor: **Fläkt Aktiebolag**
**Sickla Allé 13**
**S-131 34 Nacka (SE)**

(72) Inventor: **Lindau, Leif**
**Lungörtvägen 5**
**S-352 51 Växjö (SE)**
Inventor: **Ahman, Stefan**
**Älmasvägen 16**
**S-352 42 Växjö (SE)**

(74) Representative: **Hansen, Bernd, Dr.rer.nat. et al**
**Hoffmann, Eitle & Partner Patentanwälte**
**Arabellastrasse 4**
**D-8000 München 81 (DE)**

Courier Press, Leamington Spa, England.

## Description

Gases can be purified from acid gas components by contacting them with a sorbent in a liquid phase (wet method) or in a solid phase (dry method). The present invention relates to a substantially dry method. As the dry method includes reaction steps implying diffusion into a solid phase, one of its disadvantages is a relatively low reaction rate.

The object of the present invention is to reduce said disadvantages.

According to the invention this is achieved by a method of purifying gases from acid components in which the gases are contacted with a mixture consisting of a solid sorbent phase and a liquid aqueous phase, distributed over the surface of the solid phase and which has good solubility both for the gas and components and the sorption products, characterized in that the liquid aqueous phase is created by adding to the solid sorbent phase a hygroscopic substance, which at the water partial pressure and temperature prevailing in the gases is thermodynamically stable.

By effecting a liquid aqueous phase with a high solubility for the participating reactants on the surface of the solid sorbent particles, the reaction steps, viz dissolving of the acid gas component, diffusion, separation of sorbent and precipitation of reaction product, proceed substantially more rapidly than the corresponding reaction steps when only gaseous and solid reactants are present. The sorbent may be an oxide, a carbonate or a hydroxide of an alkali metal. The liquid phase, may be derived from a hygroscopic salt, which at the prevailing gas temperature and gas water content is a molten hydrate.

In recent years a process for the sorption of sulphur dioxide from a hot flue gas has come into use which in the literature is referred to as "dry scrubbing". The process substantially comprises a drying step and a filtering step, and it operates as follows: The hot gas is contacted in a drying apparatus with an atomized aqueous suspension or an aqueous solution of a substance capable to react with sulphur dioxide. In the drying apparatus evaporation of the supplied water takes place and simultaneously a reaction between sulphur dioxide and the sorbent occurs. As the gas leaves the drying apparatus, the major part of the supplied water has evaporated, the gas temperature has decreased, the water vapour content of the gas has increased, and part of the sulphur dioxide has been sorbed and is now bound to the solid reaction product. The gas thereafter passes a dust separator where the solid product, the remaining sorbent and any other solid material are separated from the gas. Part of the separated dust may be further recycled into the sorption liquid in order to increase the utilization of the sorbent.

This process often results in incomplete utilization of the sorbent during the driving period. After said period the reaction between the sulphur dioxide and the sorbent proceeds in the dust separator. This reaction, however, proceeds relatively slowly, since the reaction steps occur in solid phases.

The present invention has also the object of bringing about a higher reaction rate during said latter process step. This is achieved by the method defined in the dependent claims.

This higher reaction rate is obtained by adding to the gas a limited amount of such substances, which under the conditions prevailing in the dust separator form on the surface of the solid particles a liquid aqueous phase with sufficient solubility for the reactants. As the reaction steps, viz. solution of sulphur dioxide, diffusion of reactants and precipitation of product, proceed substantially more rapid than the corresponding steps in a solid phase, the net effect thereof is an increase to the total reaction rate. In order to prevent the operation of the dust separator from being jeopardized, the volume of the liquid phase must be small in relation to the volume of the solid phases, and in order to achieve a good effect, the liquid phase must be well distributed over the surface of the solid phases. Examples of compounds, the hydrate of which has the property of, under the conditions prevailing at the absorption of sulphur dioxide from flue gases of fossil-fired boilers, being in liquid phase are $FeCl_3$, $Fe(NO_3)_3$, $Fe(NO_3)_2$, $Al(NO_3)_3$, $Ca(NO_3)_3$, $Mg(ClO_3)_2$, $MnCl_2$, $K_2SO_4$, $MgSO_4$, $NaAl(SO_4)_2$, $NaClO$, $Na_3PO_4$, $Na_2SiO_3$, $Na_2SO_4$, $Zn(NO_3)_2$.

Example

In a pilot plant with a capacity of 10 000 $Nm^3/h$ comprising a drying apparatus, into which an atomized sorption liquid is injected, and a fabric filter as the dust separator, tests were carried out for determining the capacity with and without the addition of some of the aforesaid substances. Calcium hydroxide was used as sorbent in an amount corresponding to a mole ratio $Ca/SO_2=1,1$ (calculated on ingoing gas). The ingoing gas had a temperature of 140°C and an $SO_2$-content of 850 ppm.

The filtering velocity of the fabric filter was 92 m/h. The gas temperature after passing through the fabric filter was 70°C. The following $SO_2$ sorption efficiencies were measured.

| Test No. | Addition | Efficiency |
|---|---|---|
| 1 | — | 70 |
| 2 | $FeCl_3$ | 74 |
| 3 | $FeSO_4$ | 83 |
| 4 | $Fe(NO_3)_3$ | 81 |
| 5 | $Al(NO_3)_3$ | 71 |
| 6 | $Ca(NO_3)_2$ | 76 |
| 7 | $NaAl(SO_4)_2$ | 78 |
| 8 | $Na_2SO_4$ | 74 |
| 9 | $Zn(NO_3)_2$ | 77 |

**Claims**

1. A method of purifying gases from acid components in which the gases are contacted with a mixture consisting of a solid sorbent phase and a liquid aqueous phase, distributed over the surface of the solid phase and which has good solubility both for the gas and components and the sorption products, characterized in that the liquid aqueous phase is created by adding to the solid sorbent phase a hygroscopic substance, which at the water partial pressure and temperature prevailing in the gases is thermodynamically stable.

2. A method according to claim 1, characterized in that the gases consist of flue gases and the acid gas components consist of sulphur dioxide and the purifying process comprises a drying and sorption step and a dust separation and a secondary sorption step.

3. A method as defined in claim 1, characterized in that the hydroscopic substance for the creation of the liquid phase is one of the following: $FeCl_3$, $Fe(NO_3)_3$, $Fe(NO_3)_2$, $Al(NO_3)_3$, $Ca(NO_3)_2$, $Mg(ClO_3)_2$, $MnCl_2$, $K_2SO_4 \cdot MgSO_4$, $NaAl(SO_4)_2$, $NaClO$, $Na_3PO_4$, $Na_2SiO_3$, $Na_2SO_4$, $Zn(NO_3)_2$.

4. A method as defined in claims 2—3, characterized in that the added hygroscopic substance constitutes at maximum 20 per cent by volume, preferably at maximum 5 per cent volume, of the solid phases present at the dust separator step.

5. A method as defined in claims 1—4, characterized in that the solid sorbent is calcium hydroxide, calcium carbonate, magnesium calcium carbonate, sodium carbonate, sodium hydroxide or mixtures thereof.

6. A method as defined in Claim 2, characterized in that the added hygroscopic substance is at least partially extracted from fly ash separated from the flue gas.

7. A method as defined in claim 2, characterized in that the added hygroscopic substance is at least partially extracted from gaseous substances in the flue gas.

8. A method as defined in claims 1—6, characterized in that a premixed mixture of the hygroscopic substance and an atomized sorption liquid is used.

**Patentansprüche**

1. Verfahren zur Reinigung von Gasen von sauren Komponenten, bei welchem die Gase mit einem Gemisch, bestehend aus einer festen Sorbensphase und einer flüssig-wäßrigen Phase, die auf der Oberfläche der festen Phase verteilt ist und eine gute Löslichkeit sowohl für das Gas und die Komponenten und die Sorptionsprodukte besitzt, in Kontakt gebracht wird, dadurch gekennzeichnet, daß die flüssigwäßrige Phase dadurch hergestellt wird, daß man zu der festen Sorbensphase eine hygroskopische Substanz zugibt, die bei dem Wasserpartialdruck und der Temperatur, die in den Gasen herrschen, thermodynamisch stabil ist.

2. Verfahren nach Anspruch 1, dadurch gekennzeichnet, daß die Gase aus Rauchgasen bestehen und die sauren Gaskomponenten Schwefeldioxid darstellen und der Reinigungsprozeß einen Trocknungs- und Sorptionsschritt, eine Staubabscheidung und einen sekundären Sorptionsschritt umfaßt.

3. Verfahren nach Anspruch 1, dadurch gekennzeichnet, daß die zur Bildung der flüssigen Phase zugegebene hygroskopische Substanz eine der folgenden darstellt: $FeCl_3$, $Fe(NO_3)_3$, $Fe(NO_3)_2$, $Al(NO_3)_2$, $Al(NO_3)_3$, $Ca(NO_3)_2$, $Mg(ClO_3)_2$, $MnCl_2$, $K_2SO_4 \cdot MgSO_4$, $NaAl(SO_4)_2$, $NaClO$, $Na_3PO_4$, $Na_2SiO_3$, $Na_2SO_4$, $Zn(NO_3)_2$.

4. Verfahren nach den Ansprüche 2 bis 3, dadurch gekennzeichnet, daß die zugegebene hygroskopische Substanz maximal 20 Volumenprozent, vorzugsweise maximal 5 Volumenprozent, der festen Phasen, die im Staubabscheiderschritt vorliegen, ausmacht.

5. Verfahren nach den Ansprüch 1 bis 4, dadurch gekennzeichnet, daß das feste Sorbens Calciumhydroxid, Calciumcarbonat, Magnesium-Calcium-Carbonat, Natriumcarbonat, Natriumhydroxid oder Gemische derselben darstellte.

6. Verfahren nach Anspruch 2, dadurch gekennzeichnet, daß die zugegebene hygroskopische Substanz mindestens teilweise aus der Flugasche, die aus dem Rauchgas abgetrennt wurde, extrahiert wird.

7. Verfahren nach Anspruch 2, dadurch gekennzeichnet, daß die zugegebene hygroskopische Substanz mindestens teilweise aus gasförmigen Substanzen in dem Rauchgas extrahiert werden.

8. Verfahren nach den Ansprüche 1 bis 6, dadurch gekennzeichnet, daß ein vorgemischtes Gemisch der hygroskopischen Substanz und einer atmoisierten Sorptionsflüssigkeit verwendet wird.

## Revendications

1. Procédé pour éliminer des composants acides de gaz, dans lequel les gaz sont mis en contact avec un mélange consistant en une phase sorbant solide et une phase aqueuse liquide, répartie sur la surface de la phase solide et qui a une bonne solubilité tant vis-à-vis du gaz et des composants que des produits de sorption, caractérisé en ce que la phase aqueuse liquide est créée en ajoutant à la phase sorbant solide un substance hygroscopique qui, à la pression partielle de l'eau et à la température régnant dans les gaz, est thermodynamiquement stable.

2. Procédé selon la revendication 1, caractérisé en ce que les gaz consistent en des gaz de carneau et que les composants acides gazeux consistent en anhydride sulfureux, et que le procédé de purification comprend une étape de séchage et de sorption et une étape de séparation des poussières et de sorption secondaire.

3. Procédé selon la revendication 1, caractérisé en ce que la substance hygroscopique ajoutée pour la création de la phase liquide est l'une des suivantes: $FeCl_3$, $Fe(NO_3)_3$, $Fe(NO_3)_2$, $Al(NO_3)_3$, $Ca(NO_3)_2$, $Mg(ClO_3)_2$, $MnCl_2$, $K_2SO_4 \cdot MgSO_4$, $NaAl(SO_4)_2$, $NaClO$, $Na_3PO_4$, $Na_2SiO_3$, $Na_2SO_4$, $Zn(NO_3)_2$.

4. Procédé selon les revendications 2—3, caractérisé en ce que la substance hygroscopique ajoutée compte pour au plus 20 % en volume, de préférence au plus 5 % en volume, des phases solides présentes lors de l'étape de séparation des poussières.

5. Procédé selon les revendications 1—4, caractérisé en ce que le sorbant solide est l'hydroxyde de calcium, le carbonate de calcium, le carbonate de magnésium et de calcium, le carbonate de sodium, l'hydroxyde de sodium ou leurs mélanges.

6. Procédé selon la revendication 2, caractérisé en ce que la substance hygroscopique ajoutée est au moins partiellement extraite des cendres volantes séparées des gaz de carneau.

7. Procédé selon la revendication 2, caractérisé en ce que la substance hygroscopique ajoutée est au moins partiellement extraite de substances gazeuses dans les gaz de carneau.

8. Procédé selon les revendications 1—6, caractérisé en ce qu'on utilise un mélange prémélangé de la substance hygroscopique et d'un liquide de sorption atomisé.